# EUROPEAN PATENT APPLICATION

(11) **EP 2 878 797 A1**
(43) Date of publication of application: **03.06.2015**
(21) Application number: 13856953.8
(22) Date of filing: 27.09.2013
(51) Int. Cl.: F02M 25/08

(54) **EVAPORATED FUEL PROCESSING DEVICE**

(30) Priority: 22.11.2012 JP 2012256411
(71) Applicant: TOYOTA JIDOSHA KABUSHIKI KAISHA, Toyota-shi, Aichi-ken, 471-8571 (JP)
(72) Inventor: ASO, Shuichi, Toyota-shi, Aichi-ken 471-8571 (JP)
(74) Representative: TBK
(86) International application number: PCT/JP2013/005750
(87) International publication number: WO 2014/080556

(57) **Abstract**

An ECU determines whether an engine is temporarily stopped (step S1). When the ECU determines that the engine is temporarily stopped, the ECU prohibits purging with the use of a purge mechanism (step S2), and heats a canister (step S3). When the ECU determines that the engine is not temporarily stopped, the ECU permits purging with the use of the purge mechanism (step S4).

## Description

### TECHNICAL FIELD

The invention relates to an evaporated fuel processing system.

### BACKGROUND ART

There is known an existing evaporated fuel processing system (see, for example, Patent Document 1). The evaporated fuel processing system includes an absorbing unit, a purge mechanism and an activation unit. The absorbing unit includes a canister that absorbs evaporated fuel. The purge mechanism carries out purging for the canister. The activation unit includes a heater. The heater activates the absorbing unit to a state where fuel vapor is easy to desorb while a battery is connected to an external commercial power supply.

With such a configuration, the existing evaporated fuel processing system operates the heater by using electric power that is obtained from at least one of the battery or the external commercial power supply while the battery is connected to the external commercial power supply. Thus, the existing evaporated fuel processing system improves the evaporated fuel desorption performance of the canister before starting up an engine.

### RELATED ART DOCUMENT

### PATENT DOCUMENT

Patent Document 1: Japanese Patent Application Publication No. 2008-195214 (JP 2008-195214 A)

### SUMMARY OF THE INVENTION

### PROBLEM TO BE SOLVED BY THE INVENTION

That is, the existing evaporated fuel processing system as described in Patent Document 1 improves the desorption performance of the canister (hereinafter, also referred to as "adsorber") at the time of purging. The purging is carried out for the first time when the engine shifts from a state where the engine has not been operated for a relatively long time, like a state where the vehicle is parked, to a state where the engine is in operation.

Thus, in the existing evaporated fuel processing system, when the engine is temporarily stopped and the temperature of the adsorber has decreased, it is not possible to improve the desorption performance of the adsorber at the time of purging next time, so there is an inconvenience that it is not possible to sufficiently exercise the evaporated fuel desorption performance of the adsorber.

It is an object of the invention to provide an evaporated fuel processing system that is able to sufficiently exercise the desorption performance of an adsorber as compared to the existing evaporated fuel processing system.

### MEANS FOR SOLVING THE PROBLEM

In order to achieve the above object, an evaporated fuel processing system according to the invention includes: a fuel tank that stores fuel for an internal combustion engine; a fuel pump that draws fuel that is supplied from the fuel tank to the internal combustion engine; an adsorber that is provided inside the fuel tank and that adsorbs evaporated fuel developed inside the fuel tank; and a purge mechanism that introduces the evaporated fuel from the adsorber into an intake pipe of the internal combustion engine. The evaporated fuel processing system includes a heat transfer amount control unit that, on the condition that the internal combustion engine is temporarily stopped, increases an amount of heat that is transferred from the fuel pump to the adsorber.

With this configuration, the evaporated fuel processing system according to the invention heats the adsorber by increasing the amount of heat that is transferred from the fuel pump to the adsorber while purging cannot be carried out because the internal combustion engine is temporarily stopped. Thus, the evaporated fuel processing system improves the desorption performance of the adsorber at the time when it becomes possible to carry out purging. Therefore, it is possible to sufficiently exercise the desorption performance of the adsorber as compared to the existing evaporated fuel processing system.

The evaporated fuel processing system according to the invention may further include an internal combustion engine control unit that stops the internal combustion engine on the condition that a predetermined stop condition is satisfied at the time when the internal combustion engine is operated at idle, and that, after stopping the internal combustion engine, restarts the internal combustion engine on the condition that a predetermined start-up condition is satisfied, and, on the condition that the internal combustion engine is stopped by the internal combustion engine control unit, the heat transfer amount control unit may determine that the internal combustion engine is temporarily stopped.

With this configuration, the evaporated fuel processing system according to the invention heats the adsorber by increasing the amount of heat that is transferred from the fuel pump to the adsorber while purging cannot be carried out because the internal combustion engine is stopped through a so-called idle stop function. Thus, the evaporated fuel processing system improves the desorption performance of the adsorber at the time when it becomes possible to carry out purging. Therefore, it is possible to sufficiently exercise the desorption performance of the adsorber as compared to the existing evaporated fuel processing system.

The evaporated fuel processing system according to the invention may further include a shift position sensor that detects a shift position, and, on the condition that a shift range corresponding to a shift position detected by the shift position sensor at the time when the internal combustion engine is stopped is a drive range, the heat transfer amount control unit may determine that the internal combustion engine is temporarily stopped.

With this configuration, the evaporated fuel processing system according to the heats the adsorber by increasing the amount of heat that is transferred from the fuel pump to the adsorber while purging cannot be carried out because the internal combustion engine is temporarily stopped by driver's operation, or the like. Thus, the evaporated fuel processing system improves the desorption performance of the adsorber at the time when it becomes possible to carry out purging. Therefore, it is possible to sufficiently exercise the desorption performance of the adsorber as compared to the existing evaporated fuel processing system.

The heat transfer amount control unit may increase an amount of heat that is transferred from the fuel pump to the adsorber via the fuel.

With this configuration, the evaporated fuel processing system according to the invention is able to heat the adsorber with the use of fuel heated by the fuel pump.

The heat transfer amount control unit may increase an amount of heat that is transferred from the fuel pump to the adsorber via fuel discharged from the fuel pump.

With this configuration, the evaporated fuel processing system according to the invention is able to heat the adsorber with the use of fuel heated by and discharged from the fuel pump.

In the evaporated fuel processing system according to the invention, an internal tank may be provided inside the fuel tank, and the internal tank may accommodate the fuel pump and the adsorber.

With this configuration, the evaporated fuel processing system according to the invention is able to efficiently increase the amount of heat that is transferred from the fuel pump to the adsorber by accommodating the fuel pump and the adsorber within the internal tank having a smaller volume than the fuel tank.

The heat transfer amount control unit may increase the amount of heat that is transferred from the fuel pump to the adsorber by increasing driving force of the fuel pump.

With this configuration, the evaporated fuel processing system according to the invention is able to increase the amount of heat that is transferred from the fuel pump to the adsorber in order to heat the fuel pump by increasing the driving force of the fuel pump.

### EFFECT OF THE INVENTION

According to the invention, it is possible to provide an evaporated fuel processing system that is able to sufficiently exercise the desorption performance of the adsorber as compared to the existing evaporated fuel processing system.

### BRIEF DESCRIPTION OF THE DRAWINGS

[FIG. 1] FIG. 1 is a schematic configuration view of a relevant portion, including a driving internal combustion engine and a fuel system of the internal combustion engine, in a vehicle on which an evaporated fuel processing system according to a first embodiment of the invention is mounted.
[FIG. 2] FIG. 2 is a flowchart that shows a canister temperature increasing operation of the evaporated fuel processing system according to the first embodiment of the invention.
[FIG. 3] FIG. 3 is a flowchart that shows a canister temperature increasing operation of the evaporated fuel processing system according to the first embodiment of the invention.
[FIG. 4] FIG. 4 is a schematic configuration view of a relevant portion, including a driving internal combustion engine and a fuel system of the internal combustion engine, in a vehicle on which an evaporated fuel processing system according to a second embodiment of the invention is mounted.
[FIG. 5] FIG. 5 is a schematic configuration view of a relevant portion, including a driving internal combustion engine and a fuel system of the internal combustion engine, in a vehicle on which an evaporated fuel processing system according to a third embodiment of the invention is mounted.
[FIG. 6] FIG 6 is a schematic configuration view of a relevant portion, including a driving internal combustion engine and a fuel system of the internal combustion engine, in a vehicle on which an evaporated fuel processing system according to a fourth embodiment of the invention is mounted.

### MODES FOR CARRYING OUT THE INVENTION

Hereinafter, embodiments of the evaporated fuel processing system according to the invention will be described with reference to the accompanying drawings.

### First Embodiment

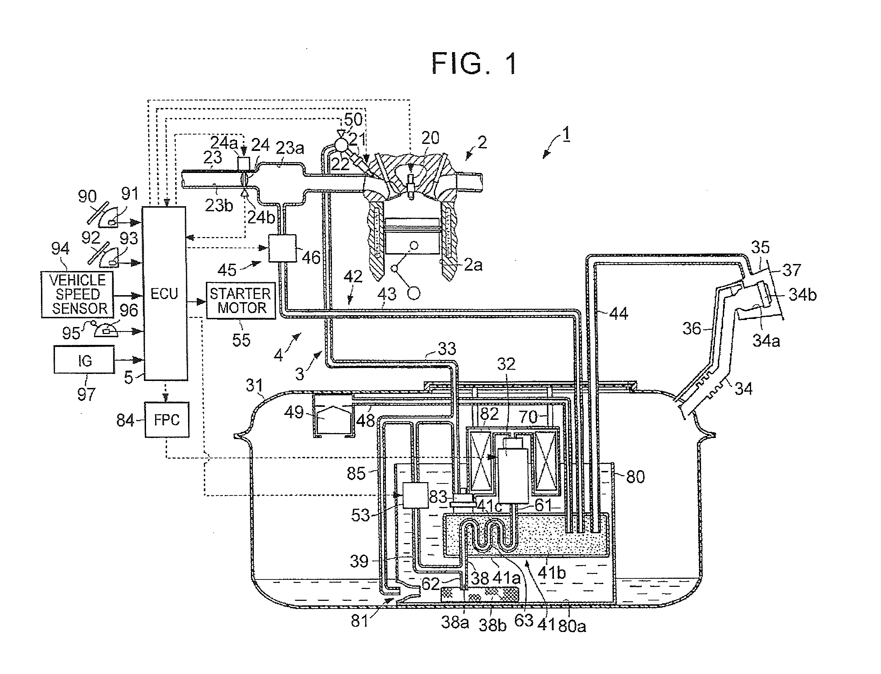

FIG. 1 shows the schematic configuration of a vehicle on which the evaporated fuel processing system according to a first embodiment of the invention is mounted, that is, the mechanism of a driving internal combustion engine and a fuel system that supplies fuel to the internal combustion engine and purges fuel from the internal combustion engine. The internal combustion engine according to the present embodiment uses highly-volatile fuel, and is mounted on the vehicle in order to propel the vehicle.

First, the configuration will be described.

As shown in FIG. 1, the vehicle 1 according to the present embodiment includes an engine 2, a fuel supply mechanism 3 having a fuel tank 31, a fuel purge system 4 that constitutes the evaporated fuel processing system, and an electronic control unit (ECU) 5.

The engine 2 is formed of a spark-ignition multi-cylinder internal combustion engine, for example, a four-cycle in-line four-cylinder engine, that uses ignition plugs 20 that are controlled by the ECU 5.

Injectors 21 (fuel injection valves) are respectively mounted at intake port portions of four cylinders 2a (only one of them is shown in FIG. 1) of the engine 2, and the plurality of injectors 21 are connected to a delivery pipe 22.

Highly-volatile fuel (for example, gasoline) is pressurized to a fuel pressure required of the engine 2, and is supplied from a fuel pump 32 (described later) to the delivery pipe 22.

An intake pipe 23 is connected to the intake port portions of the engine 2. A surge tank 23a is provided in the intake pipe 23. The surge tank 23a has a predetermined volume and is used to suppress intake pulsation and intake interference.

An intake passage 23b is formed inside the intake pipe 23. A throttle valve 24 is provided in the intake passage 23b. The throttle valve 24 is driven by a throttle actuator 24a so that the opening degree is adjustable. The throttle valve 24 adjusts the intake air amount that is taken into the engine 2 by adjusting the opening degree of the intake passage 23b.

The fuel supply mechanism 3 includes the fuel tank 31, an internal tank 80, the fuel pump 32, a fuel supply line 33 and a suction line 38. The internal tank 80 is provided inside the fuel tank 31. The fuel supply line 33 connects the delivery pipe 22 to the fuel pump 32. The suction line 38 is provided upstream of the fuel pump 32.

The fuel tank 31 is arranged at the lower side of the body of the vehicle 1, and stores fuel that is consumed by the engine 2 so as to be able to supply the fuel. The internal tank 80 is formed in a substantially cylindrical shape with a bottom, and is provided inside the fuel tank 31.

The internal tank 80 is able to store fuel inside. Specifically, the internal tank 80 includes a jet pump 81 that introduces fuel inside the fuel tank 31 into the internal tank 80. The jet pump 81 introduces fuel into the internal tank 80 in response to the operation of the fuel pump 32.

The shape of the internal tank 80 is not limited to the cylindrical shape, and may be a square tubular shape or a box shape. The shape of the internal tank 80 is not specifically limited. A canister 41, a suction filter 38b, a fuel filter 82 and a pressure regulator 83 are accommodated inside the internal tank 80 in addition to the fuel pump 32.

The fuel pump 32 is of a variable discharge capacity (displacement and discharge pressure) type that is able to draw fuel inside the fuel tank 31 and pressurize the fuel to a predetermined feed fuel pressure or higher, and is, for example, formed of a circumferential flow pump. Although the detailed internal configuration of the fuel pump 32 is not shown, the fuel pump 32 includes a pump driving impeller and a built-in motor that drives the impeller.

The fuel pump 32 is able to change its discharge capacity per unit time by changing at least one of the rotation speed and rotation torque of the pump driving impeller in accordance with the driving voltage and load torque of the built-in motor.

In order to change the discharge capacity of the fuel pump 32 in this way, the fuel supply mechanism 3 includes a fuel pump controller (FPC) 84 that controls the driving voltage of the fuel pump 32 in response to control from the ECU 5..

The casing of the fuel filter 82 is held inside the internal tank 80 integrally with the fuel pump 32 by a holding mechanism 70. The fuel filter 82 filters fuel discharged from the fuel pump 32. In the present embodiment, the fuel filter 82 is a known one. The casing of the fuel filter 82 is formed so as to surround the fuel pump 32, and filters fuel discharged from the fuel pump 32.

The pressure regulator 83 is formed of an emergency normally-closed valve provided downstream of the fuel filter 82. The pressure regulator 83 opens when the fuel pressure in the fuel filter 82 becomes higher than or equal to a predetermined fuel pressure, and returns redundant fuel into the internal tank 80.

The fuel supply line 33 forms a fuel supply passage that communicates an output port of the pressure regulator 83 and the inside of the delivery pipe 22 with each other. A pilot line 85 is connected to the fuel supply line 33. The pilot line 85 is used to supply driving flow to the jet pump 81 by returning at least part of fuel discharged from the fuel pump 32 inside the fuel tank 31.

Here, in FIG. 1, the pilot line 85 and the fuel supply line 33 are shown as substantially equivalent lines; however, the passage cross-sectional areas of the pilot line 85 and fuel supply line 33 may be varied or an appropriate throttle may be provided in accordance with the set ratio of the maximum flow rate of fuel inside the pilot line 85 to the maximum flow rate of fuel inside the fuel supply line 33.

The suction line 38 forms a suction passage 38a upstream of the fuel pump 32. The suction filter 38b is provided at the most upstream portion of the suction passage 38a. The suction filter 38b is a known one, and filters fuel that is introduced into the fuel pump 32.

On the other hand, a refueling pipe 34 is provided at the fuel tank 31 so as to protrude from the fuel tank 31 laterally or rearward of the vehicle 1. A fuel inlet 34a is formed at the distal end of the refueling pipe 34 in the protruding direction. The fuel inlet 34a is accommodated inside a fuel inlet box 35 provided at the body (not shown) of the vehicle 1.

The refueling pipe 34 includes a circulation line 36 that communicates the upper portion of the fuel tank 31 with the upstream portion inside the refueling pipe 34. A fuel lid 37 is provided at the fuel inlet box 35. The fuel lid 37 is opened outward at the time when fuel is fed.

When fuel is fed, fuel is allowed to be poured into the fuel tank 31 via the fuel inlet 34a by opening the fuel lid 37 and removing a cap 34b detachably attached to the fuel inlet 34a.

The fuel purge system 4 is interposed between the fuel tank 31 and the intake pipe 23, more specifically, between the fuel tank 31 and the surge tank 23a. The fuel purge system 4 is able to release evaporated fuel developed inside the fuel tank 31 to the intake passage 23b at the time of the intake stroke of the engine 2 and cause the released evaporated fuel to combust.

The fuel purge system 4 includes the canister 41 (adsorber), a purge mechanism 42 and a purge control mechanism 45. The canister 41 adsorbs evaporated fuel developed inside the fuel tank 31. The purge mechanism 42 carries out purging for introducing purge gas, including fuel and air, desorbed from the canister 41 by passing air through the canister 41, into the intake pipe 23 of the engine 2. The purge control mechanism 45 suppresses fluctuations in air-fuel ratio in the engine 2 by controlling the amount of purge gas that is introduced into the intake pipe 23.

The canister 41 contains an adsorbent 41b, such as activated carbon, inside a canister case 41a, and is provided inside the internal tank 80 so as to be distanced from an inner bottom face 80a of the internal tank 80. The inside (adsorbent containing space) of the canister 41 communicates with an upper space inside the fuel tank 31 via an evaporation line 48 and a gas-liquid separation valve 49.

Thus, when fuel evaporates inside the fuel tank 31 and evaporated fuel accumulates in the upper space inside the fuel tank 31, the canister 41 is able to adsorb evaporated fuel with the use of the adsorbent 41b. When the liquid level of fuel rises or the liquid level of fuel fluctuates inside the fuel tank 31, the gas-liquid separation valve 49 having a check valve function floats and closes the distal end portion of the evaporation line 48.

The purge mechanism 42 includes a purge line 43 and an atmosphere line 44. The purge line 43 communicates the inside of the canister 41 with the internal portion of the surge tank 23a within the intake passage 23b of the intake pipe 23. The atmosphere line 44 opens the inside of the canister 41 to an atmosphere side, for example, an atmospheric pressure space inward of the fuel inlet box 35.

When a negative pressure is generated inside the surge tank 23a during operation of the engine 2, the purge mechanism 42 is able to introduce the negative pressure to one end side inside the canister 41 through the purge line 43, and introduce the atmosphere to the other end side inside the canister 41 through the atmosphere line 44.

Thus, the purge mechanism 42 is able to desorb (release) fuel, adsorbed by the adsorbent 41b of the canister 41 and held inside the canister 41, from the canister 41 and introduce the fuel into the surge tank 23a.

The purge control mechanism 45 includes a purging vacuum solenoid valve (hereinafter, referred to as "purging VSV") 46 that is controlled by the ECU 5.

The purging VSV 46 is provided in the purge line 43. The purging VSV 46 is able to variably control the amount of fuel that is desorbed from the canister 41 by changing the opening degree of a halfway portion of the purge line 43.

Specifically, the purging VSV 46 is able to change its opening degree through duty control over its exciting current by the ECU 5, and is able to introduce fuel desorbed from the canister 41 due to the intake negative pressure in the intake pipe 23 into the surge tank 23a as purge gas together with air at a purge rate according to the duty ratio.

In the present embodiment, part of the suction line 38 that connects the suction filter 38b to the fuel pump 32 passes through the inside of the canister 41.

Specifically, the suction line 38 is formed of a pump-side connecting portion 61, a filter-side connecting portion 62 and a heat transfer line portion 63. The pump-side connecting portion 61 is connected to a suction port of the fuel pump 32. The filter-side connecting portion 62 is connected to the suction filter 38b. The heat transfer line portion 63 is located between these pump-side connecting portion 61 and filter-side connecting portion 62.

Particularly, the heat transfer line portion 63 is arranged inside the canister 41. The heat transfer line portion 63, for example, has a meander shape inside the canister 41. Thus, it is possible to increase the contact area between fuel introduced into the fuel pump 32 and the adsorbent 41b of the canister 41 on which fuel is adsorbed, so it is possible to increase a heat transfer amount.

The shape of the heat transfer line portion 63 is not limited to the meander shape as long as it is possible to increase the contact area with the adsorbent 41b. For example, the shape of the heat transfer line portion 63 may be various shapes, such as a shape in which a line is branched off into a plurality of paths inside the adsorbent 41b and these plurality of paths are arranged in parallel with each other and a spiral shape.

Here, the heat transfer line portion 63 of the suction line 38 is integrally coupled to the canister case 41a, and a heat transfer surface 41c is formed of the inner wall surface of the heat transfer line portion 63. The heat transfer surface 41c is the inner wall surface of the internal passage of the canister 41.

The heat transfer surface 41c is able to guide fuel flowing inside the fuel tank 31 during operation of the fuel pump 32, particularly, fuel that is introduced into the fuel pump 32, in the suction direction. In addition, the heat transfer surface 41c is able to transfer heat between the canister 41 and suction-side fuel flowing in the direction in which fuel is introduced into the fuel pump 32 within fuel inside the fuel tank 31.

That is, the heat transfer line portion 63 is made of, for example, a metal raw material having such a high heat conductivity that, when there is a temperature difference between the suction-side fuel and the canister 41, it is possible to cause good heat transfer to occur at the heat transfer surface 41c and to efficiently transfer heat from the heat transfer line portion 63 to the adsorbent 41b on which fuel is adsorbed.

A return line 39 is connected between the fuel supply line 33 and the suction line 38. The return line 39 returns fuel discharged from the fuel pump 32, more specifically, fuel, discharged from the fuel pump 32 and not supplied into the fuel supply line 33 or the pilot line 85, to the suction passage 38a upstream of the canister 41 inside the fuel tank 31.

Specifically, the return line 39 is arranged inside the fuel tank 31. One end of the return line 39 at the upstream side in the return direction branches off from the fuel supply line 33, and one end of the return line 39 at the downstream side in the return direction is connected to the filter-side connecting portion 62 of the suction line 38.

The return line 39 constitutes a return mechanism that is able to return fuel discharged from the fuel pump 32 to the intake side of the fuel pump 32 inside the fuel tank 31. In the present embodiment, the return line 39 returns fuel discharged from the fuel pump 32 into the suction line 38 upstream of the canister 41.

In FIG. 1, the return line 39 and the fuel supply line 33 are shown as substantially equivalent lines; however, the passage cross-sectional areas of the return line 39 and fuel supply line 33 may be varied or an appropriate throttle may be provided in accordance with the set ratio of the maximum flow rate of fuel inside the return line 39 to the maximum flow rate of fuel inside the fuel supply line 33.

A fuel pressure adjustment electromagnetic valve 53 is provided in the return line 39. The fuel pressure adjustment electromagnetic valve 53 is able to variably control the fuel pressure in the delivery pipe 22 by changing the opening degree of a halfway portion of the return line 39.

Specifically, the fuel pressure adjustment electromagnetic valve 53 is of a normally-closed type, and switches into a valve open state on the basis of a valve open signal from the ECU 5. Specifically, the fuel pressure adjustment electromagnetic valve 53 is, for example, a known normally-closed electromagnetic valve in which a valve element is urged by an urging member, such as a compression spring, toward a normally-closed side and the valve element is urged in a valve opening direction by exciting an electromagnetic solenoid in response to the valve open signal from the ECU 5. The fuel pressure adjustment electromagnetic valve 53 may be a normally-closed type, and may switch into a valve closed state on the basis of a valve close signal from the ECU 5.

The ECU 5 is formed of a microprocessor that includes a central processing unit (CPU) (not shown), a read only memory (ROM) (not shown), a random access memory (RAM) (not shown), a flash memory (not shown) and an input/output port (not shown).

A program for causing the microprocessor to function as the ECU 5 is stored in the ROM of the ECU 5. That is, the CPU of the ECU 5 executes the program stored in the ROM using the RAM as a work area. Thus, the microprocessor functions as the ECU 5.

Various sensors are connected to the input side of the input/output port of the ECU 5. The various sensors include a fuel pressure sensor 50, an accelerator operation amount sensor 91, a brake pedal position sensor 93, a vehicle speed sensor 94, a shift position sensor 96 and an ignition switch (hereinafter, simply referred to as "IG") 97. The fuel pressure sensor 50 detects the fuel pressure in the delivery pipe 22. The accelerator operation amount sensor 91 detects the accelerator operation amount that indicates the operation amount of an accelerator pedal 90. The brake pedal position sensor 93 detects the operation amount of a brake pedal 92. The vehicle speed sensor 94 detects the vehicle speed. The shift position sensor 96 detects the shift position that indicates the position of a shift lever 95.

In addition, various controlled objects are connected to the output side of the input/output port of the ECU 5. The various controlled objects include the ignition plugs 20, the throttle actuator 24a, the purging VSV 46, the fuel pressure adjustment electromagnetic valve 53 and the FPC 84, and also include a starter motor 55, and the like. The starter motor 55 drives a starter for starting up the engine 2.

The ECU 5 is able to control the purge rate through duty control over the purging VSV 46 on the basis of various pieces of sensor information. For example, the ECU 5 causes the purge mechanism 42 to carry out purging by opening the purging VSV 46 on the condition that the opening degree of the throttle valve 24, obtained from the throttle opening degree sensor 24b, is lower than a predetermined opening degree when the engine 2 is operated in a predetermined state.

In the present embodiment, the ECU 5 constitutes an internal combustion engine control unit that implements a so-called idle stop function. The ECU 5 stops the engine 2 on the condition that a predetermined stop condition is satisfied when the engine 2 is operated at idle, and, after stopping the engine 2, restarts the engine 2 on the condition that a predetermined start-up condition is satisfied.

The ECU 5 determines whether the stop condition is satisfied on the basis of the detected signals output from the various sensors connected to the ECU 5. Here, the stop condition is a combination of a plurality of conditions according to a design.

In the present embodiment, the ECU 5 determines that the stop condition is satisfied when the operation amount of the accelerator pedal 90, detected by the accelerator operation amount sensor 91, is substantially zero, the operation amount of the brake pedal 92, detected by the brake pedal position sensor 93, is larger than or equal to a predetermined amount and the vehicle speed detected by the vehicle speed sensor 53 is lower than or equal to a predetermined threshold (for example, 0.5 km/h).

In the present embodiment, the ECU 5 stops the engine 2 by stopping ignition by the ignition plugs 20 and injection of fuel by the injectors 21 on the condition that the stop condition is satisfied at the time when the engine 2 is operated at idle.

The ECU 5 determines whether the start-up condition is satisfied on the basis of detected signals output from the various sensors connected to the ECU 5. Here, the start-up condition is a combination of a plurality of conditions according to the design.

In the present embodiment, the ECU 5 determines that the start-up condition is satisfied when the operation amount of the accelerator pedal 90, detected by the accelerator operation amount sensor 91, is larger than or equal to a predetermined value and the operation amount of the brake pedal 92, detected by the brake pedal position sensor 93, is substantially zero.

In the present embodiment, the ECU 5 drives the starter motor 55 on the condition that the start-up condition is satisfied after the engine 2 is stopped through the idle stop function, and restarts the engine 2 by starting ignition by the ignition plugs 20 and injection of fuel by the injectors 21.

On the condition that the engine 2 is temporarily stopped, the ECU 5 increases the amount of heat that is transferred from the fuel pump 32 to the canister 41. For example, on the condition that the engine 2 is stopped through the idle stop function, the ECU 5 determines that the engine 2 is temporarily stopped.

Specifically, the ECU 5 increases the amount of heat that is transferred from the fuel pump 32 to the canister 41 via fuel on the condition that the engine 2 is stopped through the idle stop function.

More specifically, the ECU 5 increases the driving force of the fuel pump 32 by increasing the driving voltage of the fuel pump 32 through control over the FPC 84 and opens the fuel pressure adjustment electromagnetic valve 53 on the condition that the engine 2 is stopped through the idle stop function. In this way, the ECU 5 constitutes a heat transfer amount control unit in cooperation with the FPC 84.

When the fuel pressure adjustment electromagnetic valve 53 is opened by the ECU 5, fuel at the intake side in the fuel pump 32, particularly, fuel inside the suction line 38, joins into fuel discharged from the fuel pump 32 and returned to the intake side through the return line 39, so the fuel inside the suction line 38 includes fuel discharged from the fuel pump 32 and fuel newly introduced through the suction filter 38b.

In this way, when fuel discharged from the fuel pump 32 is returned to the intake side of the fuel pump 32 inside the fuel tank 31 through the return line 39, the heat transfer surface 41c of the canister 41 is allowed to transfer heat between the canister 41 and fuel inside the suction line 38. The fuel inside the suction line 38 flows in the direction in which fuel is introduced into the fuel pump 32, and includes fuel discharged from the fuel pump 32.

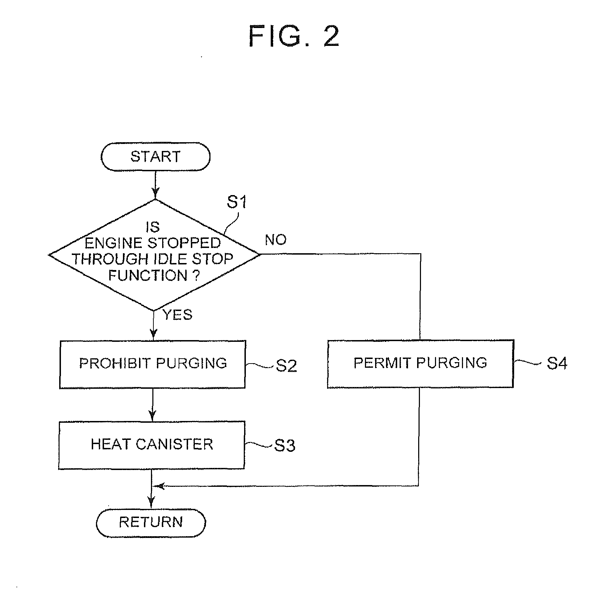

Next, a canister temperature increasing operation of the evaporated fuel processing system according to the present embodiment will be described with reference to the flowchart shown in FIG. 2. The canister temperature increasing operation described below is repeatedly executed in a period from when the ECU 5 starts up to when the ECU 5 stops.

Initially, the ECU 5 determines whether the engine 2 is stopped through the idle stop function (step S1). When it is determined that the engine 2 is stopped through the idle stop function, the ECU 5 prohibits purging by the purge mechanism 42 (step S2), and heats the canister 41 (step S3).

Specifically, when it is not in a state where the canister 41 is being heated, the ECU 5 increases the driving voltage of the fuel pump 32 by controlling the FPC 84, and opens the fuel pressure adjustment electromagnetic valve 53, thus starting to heat the canister 41. In addition, when it is in a state where the canister 41 is being heated, the ECU 5 keeps this state.

On the other hand, when it is determined that the engine 2 is not stopped through the idle stop function, the ECU 5 permits purging by the purge mechanism 42 (step S4). Specifically, the ECU 5 causes the purge mechanism 42 to carry out purging by opening the purging VSV 46 on the condition that the opening degree of the throttle valve 24, obtained from the throttle opening degree sensor 24b, is lower than a predetermined opening degree when the engine 2 is operated in a predetermined state.

As described above, in the present embodiment, the canister 41 is heated by increasing the amount of heat that is transferred from the fuel pump 32 to the canister 41 while purging cannot be carried out because the engine 2 is temporarily stopped. Thus, the desorption performance of the canister 41 at the time when it becomes possible to carry out purging is improved. Therefore, it is possible to sufficiently exercise the desorption performance of the canister 41 as compared to the existing one.

In the present embodiment, the description is made on the assumption that, when the engine 2 is stopped through the idle stop function, the ECU 5 determines that the engine 2 is temporarily stopped. In contrast, on the basis of another condition, the ECU 5 may determine that the engine 2 is temporarily stopped.

For example, on the condition that a shift range corresponding to the shift position detected by the shift position sensor 96 is a drive range while the engine 2 is stopped as a result of, for example, turning off the IG 97, the ECU 5 may determine that the engine 2 is temporarily stopped. The drive range is a range for driving the vehicle, and is, for example, a forward traveling D (drive) range, a backward traveling R (reverse) range, or the like.

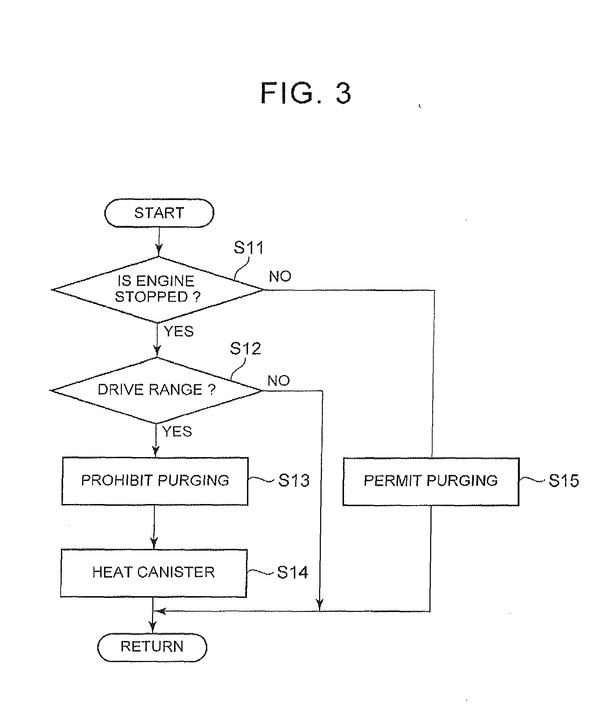

A canister temperature increasing operation of the thus configured evaporated fuel processing system according to the present embodiment will be described with reference to the flowchart shown in FIG. 3. The canister temperature increasing operation described below is repeatedly executed in a period from when the ECU 5 starts up to when the ECU 5 stops.

Initially, the ECU 5 determines whether the engine 2 is stopped (step S11). When it is determined that the engine 2 is stopped, the ECU 5 determines whether the shift range corresponding to the shift position detected by the shift position sensor 96 is the drive range (step S12).

When it is determined that the shift range corresponding to the shift position detected by the shift position sensor 96 is the drive range, the ECU 5 prohibits purging by the purge mechanism 42 (step S13), and heats the canister 41 (step S14).

Specifically, when it is not in a state where the canister 41 is being heated, the ECU 5 increases the driving voltage of the fuel pump 32 by controlling the FPC 84, and opens the fuel pressure adjustment electromagnetic valve 53, thus starting to heat the canister 41. In addition, when it is in a state where the canister 41 is being heated, the ECU 5 keeps this state.

When it is determined in step S11 that the engine 2 is not stopped, the ECU 5 permits purging (step S15). Specifically, the ECU 5 causes the purge mechanism 42 to carry out purging by opening the purging VSV 46 on the condition that the opening degree of the throttle valve 24, obtained from the throttle opening degree sensor 24b, is lower than a predetermined opening degree when the engine 2 is operated in a predetermined state.

When it is determined in step S12 that the shift range corresponding to the shift position detected by the shift position sensor 96 is not the drive range, the ECU 5 ends the canister temperature increasing operation.

### Second Embodiment

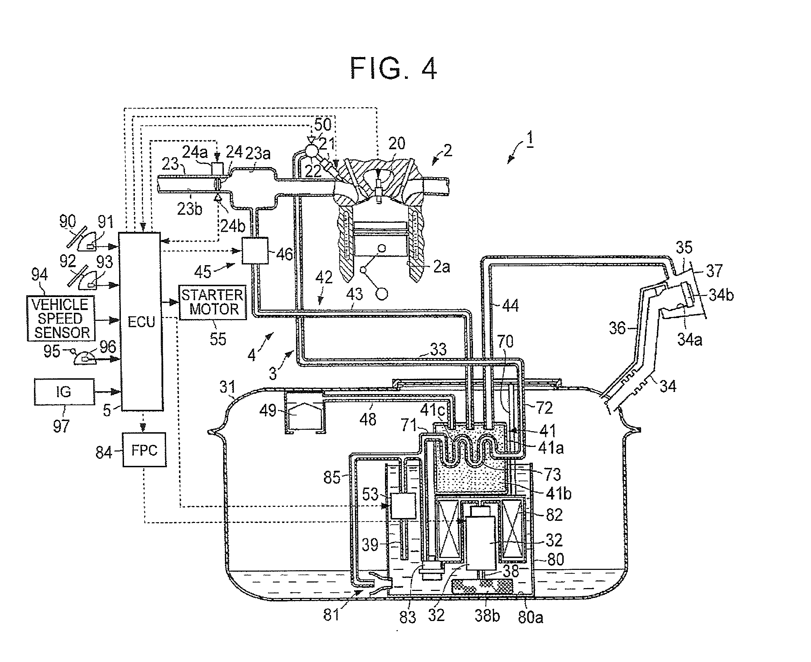

FIG. 4 shows the schematic configuration of a vehicle on which the evaporated fuel processing system according to a second embodiment of the invention is mounted, that is, the mechanism of a driving internal combustion engine and a fuel system that supplies fuel to the internal combustion engine and purges fuel from the internal combustion engine.

The present embodiment differs from the first embodiment in the configuration of the canister and its adjacent portions; however, the other major configuration is similar to that of the first embodiment. Thus, like reference numerals of corresponding components shown in FIG. 1 denote components similar to those of the first embodiment, and the difference from the first embodiment will be described below.

In the first embodiment of the invention, part of the suction line 38 that connects the suction filter 38b to the fuel pump 32 is formed to pass through the inside of the canister 41. In the present embodiment, part of the fuel supply line 33 that connects the pressure regulator 83 to the delivery pipe 22 is formed to pass through the inside of the canister 41.

Specifically, the fuel supply line 33 is formed of a regulator-side connecting portion 71, a delivery pipe-side connecting portion 72 and a heat transfer line portion 73. The regulator-side connecting portion 71 is connected to the output port of the pressure regulator 83. The delivery pipe-side connecting portion 72 is connected to the delivery pipe 22. The heat transfer line portion 73 is located between these regulator-side connecting portion 71 and delivery pipe-side connecting portion 72.

Particularly, the heat transfer line portion 73 is arranged inside the canister 41. The heat transfer line portion 73, for example, has a meander shape inside the canister 41. Thus, it is possible to increase the contact area between fuel introduced into the fuel pump 32 and the adsorbent 41b of the canister 41 on which fuel is adsorbed, so it is possible to increase a heat transfer amount.

The shape of the heat transfer line portion 73 is not limited to the meander shape as long as it is possible to increase the contact area with the adsorbent 41b. For example, the shape of the heat transfer line portion 73 may be various shapes, such as a shape in which a line is branched off into a plurality of paths inside the adsorbent 41b and these plurality of paths are arranged in parallel with each other and a spiral shape.

Here, the heat transfer line portion 73 of the fuel supply line 33 is integrally coupled to the canister case 41a, and the heat transfer surface 41c is formed of the inner wall surface of the heat transfer line portion 73. The heat transfer surface 41c is the inner wall surface of the internal passage of the canister 41.

The heat transfer surface 41c is able to guide fuel flowing inside the fuel tank 31 during operation of the fuel pump 32, particularly, fuel that is discharged from the fuel pump 32, to the delivery pipe 22. In addition, the heat transfer surface 41c is allowed to transfer heat between the canister 41 and fuel flowing in the direction in which fuel is discharged from the fuel pump 32.

That is, the heat transfer line portion 73 is made of, for example, a metal raw material having such a high heat conductivity that, when there is a temperature difference between the suction-side fuel and the canister 41, it is possible to cause good heat transfer to occur at the heat transfer surface 41c and to efficiently transfer heat from the heat transfer line portion 73 to the adsorbent 41b on which fuel is adsorbed.

In addition, in the first embodiment of the invention, one end of the return line 39 at the downstream side in the return direction is connected to the suction line 38. However, in the present embodiment, one end of the return line 39 at the downstream side in the return direction is open toward the inner bottom face 80a of the internal tank 80.

Thus, the return line 39 is able to return fuel discharged from the fuel pump 32, more specifically, fuel, discharged from the fuel pump 32 and not supplied into the fuel supply line 33 or the pilot line 85, to around the suction filter 38b provided near the inner bottom face 80a of the internal tank 80.

The canister temperature increasing operation executed by the ECU 5 according to the present embodiment is the same as the canister temperature increasing operation executed by the ECU 5 according to the first embodiment of the invention, so the description is omitted.

As described above, according to the present embodiment, similar advantageous effects to those of the first embodiment of the invention are obtained. Particularly, in the present embodiment, part of the fuel supply passage is formed of the canister 41, so it is possible to heat the canister 41 by transferring heat to the canister 41 at the time when fuel discharged from the fuel pump 32 passes through the inside of the canister 41.

### Third Embodiment

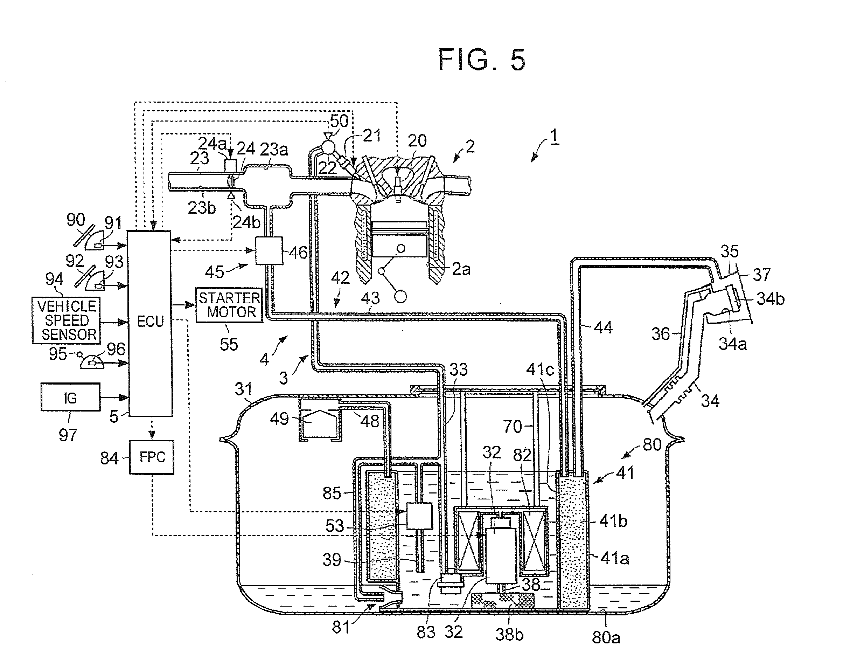

FIG. 5 shows the schematic configuration of a vehicle on which the evaporated fuel processing system according to a third embodiment of the invention is mounted, that is, the mechanism of a driving internal combustion engine and a fuel system that supplies fuel to the internal combustion engine and purges fuel from the internal combustion engine.

The present embodiment differs from the first embodiment in the configuration of the canister and its adjacent portions; however, the other major configuration is similar to that of the first embodiment. Thus, like reference numerals of corresponding components shown in FIG. 1 denote components similar to those of the first embodiment, and the difference from the first embodiment will be described below.

In the present embodiment, the return line 39 branches off from the fuel supply line 33 at one end side near the discharge side of the fuel pump 32, and is open downward near the inner bottom portion of the fuel tank 31 at the other end side.

In addition, part of the return line 39 is formed to pass through the inside of the canister 41. Specifically, the return line 39 includes a pump-side connecting portion 75, an open-side open portion 76 and a heat transfer line portion 77. The pump-side connecting portion 75 is connected to the fuel supply line 33. The heat transfer line portion 77 is located between the pump-side connecting portion 75 and the open portion 76.

Particularly, the heat transfer line portion 77 is arranged inside the canister 41. The heat transfer line portion 63, for example, has a meander shape inside the canister 41. Thus, it is possible to increase the contact area between fuel introduced into the fuel pump 32 and the adsorbent 41b of the canister 41 on which fuel is adsorbed, so it is possible to increase a heat transfer amount.

The shape of the heat transfer line portion 77 is not limited to the meander shape as long as it is possible to increase the contact area with the adsorbent 41b. For example, the shape of the heat transfer line portion 77 may be various shapes, such as a shape in which a line is branched off into a plurality of paths inside the adsorbent 41b and these plurality of paths are arranged in parallel with each other and a spiral shape.

Here, the heat transfer line portion 77 of the return line 39 is integrally coupled to the canister case 41a, and the heat transfer surface 41c is formed of the inner wall surface of the heat transfer line portion 77. The heat transfer surface 41c is the inner wall surface of the internal passage of the canister 41.

The heat transfer surface 41c is able to guide fuel flowing inside the fuel tank 31 during operation of the fuel pump 32, particularly, fuel discharged from the fuel pump 32, into the fuel tank 31. In addition, the heat transfer surface 41c is allowed to transfer heat between the canister 41 and fuel flowing in the direction in which fuel is discharged from the fuel pump 32.

That is, the heat transfer line portion 77 is made of, for example, a metal raw material having such a high heat conductivity that, when there is a temperature difference between the discharge-side fuel and the canister 41, it is possible to cause good heat transfer to occur at the heat transfer surface 41c and to efficiently transfer heat from the heat transfer line portion 77 to the adsorbent 41b on which fuel is adsorbed.

The canister temperature increasing operation executed by the ECU 5 according to the present embodiment is the same as the canister temperature increasing operation executed by the ECU 5 according to the first embodiment of the invention, so the description is omitted.

As described above, according to the present embodiment, similar advantageous effects to those of the first embodiment of the invention are obtained. Particularly, in the present embodiment, part of the return passage is formed of the canister 41, so it is possible to heat the canister 41 by transferring heat to the canister 41 at the time when fuel discharged from the fuel pump 32 and returned into the return line 39 passes through the inside of the canister 41.

### Fourth Embodiment

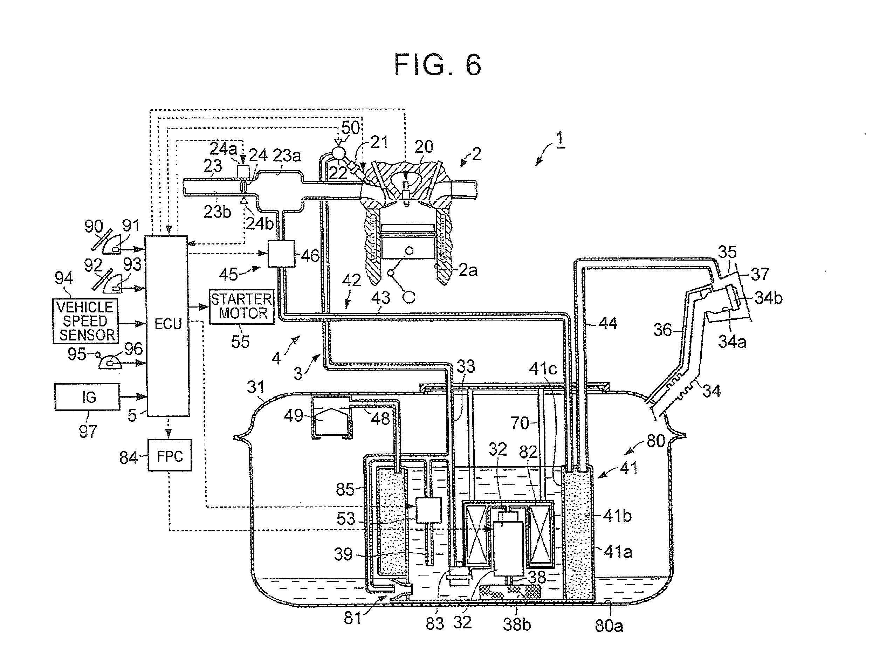

FIG. 6 shows the schematic configuration of a vehicle on which the evaporated fuel processing system according to a fourth embodiment of the invention is mounted, that is, the mechanism of a driving internal combustion engine and a fuel system that supplies fuel to the internal combustion engine and purges fuel from the internal combustion engine.

The present embodiment differs from the first embodiment in the configuration of the canister and its adjacent portions; however, the other major configuration is similar to that of the first embodiment. Thus, like reference numerals of corresponding components shown in FIG. 1 denote components similar to those of the first embodiment, and the difference from the first embodiment will be described below.

In the present embodiment, the canister 41 according to the first embodiment of the invention constitutes the internal tank 80. The internal tank 80, that is, the canister 41, is formed in a substantially cylindrical shape with a bottom, and is provided inside the fuel tank 31.

The canister 41 is able to store fuel inside the cylinder. Specifically, the canister 41 includes the jet pump 81 that introduces fuel inside the fuel tank 31 into the cylinder formed by the canister 41. The jet pump 81 changes its suction amount in accordance with the operation amount of the fuel pump 32.

The shape of the canister 41 is not limited to the cylindrical shape, and may be a square tubular shape or a box shape. The shape of the canister 41 is not specifically limited. The fuel pump 32, the suction filter 38b, the fuel filter 82 and the pressure regulator 83 are accommodated inside the cylinder formed by the canister 41.

Here, the inner face of the cylinder formed by the canister 41 has the heat transfer surface 41c. The heat transfer surface 41c is able to guide fuel flowing inside the fuel tank 31 during operation of the fuel pump 32, particularly, fuel discharged from the fuel pump 32, in the suction direction.

In addition, the heat transfer surface 41c is able to transfer heat between the canister 41 and fuel flowing in the direction in which fuel is discharged from the fuel pump 32 within fuel inside the fuel tank 31.

That is, the heat transfer surface 41c is made of, for example, a metal raw material having such a high heat conductivity that, when there is a temperature difference between the suction-side fuel and the canister 41, it is possible to cause good heat transfer to occur and to efficiently transfer heat to the adsorbent 41b on which fuel is adsorbed.

The canister temperature increasing operation executed by the ECU 5 according to the present embodiment is the same as the canister temperature increasing operation executed by the ECU 5 according to the first embodiment of the invention, so the description is omitted.

As described above, according to the present embodiment, similar advantageous effects to those of the first embodiment of the invention are obtained. Particularly, in the present embodiment, fuel discharged from the fuel pump 32 is actively introduced into the cylinder of the canister 41, so it is possible to heat the canister 41 from the inside of the cylinder even when fuel inside the fuel tank 31 reduces.

In each of the first to fourth embodiments of the invention, the configuration that the ECU 5 increases the amount of heat that is transferred from the fuel pump 32 to the canister 41 is described. The evaporated fuel processing system according to the invention may employ another configuration as long as the ECU 5 is able to increase the amount of heat that is transferred from the fuel pump 32 to the canister 41.

As described above, the evaporated fuel processing system according to the invention provides such an advantageous effect that it is possible to sufficiently exercise the desorption performance of the adsorber as compared to the existing one, so it is useful in the evaporated fuel processing system in which the adsorber is provided inside the fuel tank.

### DESCRIPTION OF REFERENCE NUMERALS

1 vehicle, 2 engine (internal combustion engine), 3 fuel supply mechanism, 4 fuel purge system, 5 ECU (internal combustion engine control unit, heat transfer amount control unit), 21 injector, 22 delivery pipe, 23 intake pipe, 23b intake passage, 24 throttle valve, 31 fuel tank, 32 fuel pump, 33 fuel supply line, 38 suction line, 38a suction passage, 41 canister (adsorber), 41b adsorbent, 41c heat transfer surface, 42 purge mechanism, 43 purge line, 44 atmosphere line, 45 purge control mechanism, 46 purging VSV, 53 fuel pressure adjustment electromagnetic valve, 80 internal tank, 81 jet pump, 84 FPC (heat transfer amount control unit), 96 shift position sensor

## Claims

1. An evaporated fuel processing system including:
a fuel tank that stores fuel for an internal combustion engine;
a fuel pump that draws fuel that is supplied from the fuel tank to the internal combustion engine;
an adsorber that is provided inside the fuel tank and that adsorbs evaporated fuel developed inside the fuel tank; and
a purge mechanism that introduces the evaporated fuel from the adsorber into an intake pipe of the internal combustion engine, the evaporated fuel processing system **characterized by** comprising:
a heat transfer amount control unit that, on the condition that the internal combustion engine is temporarily stopped, increases an amount of heat that is transferred from the fuel pump to the adsorber.

2. The evaporated fuel processing system according to claim 1, further comprising:
an internal combustion engine control unit that stops the internal combustion engine on the condition that a predetermined stop condition is satisfied at the time when the internal combustion engine is operated at idle, and that, after stopping the internal combustion engine, restarts the internal combustion engine on the condition that a predetermined start-up condition is satisfied, wherein
on the condition that the internal combustion engine is stopped by the internal combustion engine control unit, the heat transfer amount control unit determines that the internal combustion engine is temporarily stopped.

3. The evaporated fuel processing system according to claim 1, further comprising:
a shift position sensor that detects a shift position, wherein
on the condition that a shift range corresponding to a shift position detected by the shift position sensor at the time when the internal combustion engine is stopped is a drive range, the heat transfer amount control unit determines that the internal combustion engine is temporarily stopped.

4. The evaporated fuel processing system according to any one of claims 1 to 3, wherein the heat transfer amount control unit increases an amount of heat that is transferred from the fuel pump to the adsorber via the fuel.

5. The evaporated fuel processing system according to claim 4, wherein the heat transfer amount control unit increases an amount of heat that is transferred from the fuel pump to the adsorber via fuel discharged from the fuel pump.

6. The evaporated fuel processing system according to any one of claims 1 to 5, wherein
an internal tank is provided inside the fuel tank, and
the internal tank accommodates the fuel pump and the adsorber.

7. The evaporated fuel processing system according to any one of claims 1 to 6, wherein the heat transfer amount control unit increases the amount of heat that is transferred from the fuel pump to the adsorber by increasing driving force of the fuel pump.
